# EUROPEAN PATENT SPECIFICATION

(11) **EP 0 738 464 B1**
(45) Date of publication and mention of the grant of the patent: **29.08.2001**
(21) Application number: 96201007.0
(22) Date of filing: 19.04.1996
(51) Int. Cl.: A01F 25/20

(54) **Device and method for collecting fodder**
Vorrichtung und Verfahren um Futter aufzunehmen
Machine et méthode de prélèvement de fourrage

(30) Priority: 21.04.1995 NL 1000192
(43) Date of publication of application: 23.10.1996
(73) Proprietor: Trioliet Mullos B.V., 7580 AE Losser (NL)
(72) Inventor: Van der Plas, Nicolaas, 7576 WB Oldenzaal (NL)
(74) Representative: de Vries, Johannes Hendrik Fokke

(56) References cited:
- EP-A- 0 606 087
- EP-A- 0 638 230
- DE-B- 1 275 321
- FR-A- 2 112 272
- FR-A- 2 239 195
- US-A- 3 976 186

## Description

The invention relates to a device for collecting fodder, as decribed in the preamble of claim 1. A device of this kind may be constructed to be mounted on a vehicle which can be hitched to a tractor, whilst it is also possible to provide such a device with coupling means, so that the device can be coupled to the three-point linkage of a tractor.

FR-A-2.239.195 discloses such device for collecting fodder, whereby the loading means are provided with loosening means for loosening silage material from a stock thereof, which loosening means comprise a cutter, which is rotatable about a horizontal axis.

The loading means may be provided with a loading board which is attached to an arm, which arm is coupled to the container or the frame in such a manner that the arm can pivot in a vertical plane. The loading board may be provided with cutting or sawing means, by means of which fodder can be cut from a stock thereof, whilst the loading board is moved along said stock by means of said arm.

Usually the loading board is positioned at the rear of the device, seen in the normal direction of movement. In that case the tractor to which the device is hitched reverses to the storage place of the fodder, and fodder is moved from said stock to the container by means of the loading board.

The object of the invention is to provide a device for collecting fodder, whereby the fodder can be moved from the stock to the container in an efficient manner, so that the fodder can be readily treated and processed.

In order to accomplish that object a disc provided with means for loosening and/or mixing the fodder is present within said container, which disc making up at least partially the bottom of the container, and that said container, said loading means and said means for loosening and/or mixing the fodder are rotatable about the same axis with respect to said frame.

The device may be moved along the stock of fodder thereby, whilst a loading board attached to an arm is moved in lateral direction towards said stock of fodder.

According to another aspect of the invention part of the wall of the container may be made up of a loading board and the part of the wall positioned opposite said loading board may be substantially semicircular. The container thereby consists of a bottom and a vertical or an upwardly sloping wall, whereby part of the wall can be moved or pivoted in such a manner that said part forms a loading board, by means of which fodder can be moved into the container. To that end the loading board may be hinged near its bottom edge and be swung down, so that the fodder can be deposited on the loading board and will land in the container when the loading board is swung up again.

The loading board may also be secured to a telescoping arm, which arm is secured near the upper edge of the container, on the side of said container which faces away from the loading board, in such manner as to be capable of pivoting movement in a substantially vertical plane. The loading board may thereby be fixedly connected to the end of the arm and be provided with sawing or cutting means for cutting fodder from a stock thereof. Preferably the loading board is thereby provided with a main portion, which extends substantially perpendicularly to the arm, and one or two side portions, which extend substantially perpendicularly to said main portion. Such a side portion may also be provided with the aforesaid cutting means, so that a block of fodder can be readily cut from the stock.

According to another aspect of the invention the loading element may comprise loosening means, which are capable of loosening fodder, or silage material, from a stock thereof. The loosening means may be provided with a cutter, at least with a roller comprising catch means, which is rotatable, preferably in both directions, about a horizontal axis. When the cutter rotates in a direction towards the container (seen from above), grass silage material can be loosened and be moved across the cutter in the direction of the container, and when the cutter rotates in a direction away from the container (seen from above), maize silage material can be loosened and be moved under the cutter in the direction of the container.

Within the framework of the present invention the term cutter is understood to refer to any rotatable means which is capable of moving catch means through silage material.

According to another aspect of the invention said loosening means can be moved to within the container to work, further loosen of mix the fodder within said container. Thus the cutter may assist in the loosening and mixing process within the container. This makes it possible to accelerate the mixing process and/or use a simpler construction for the mixing means present within the container.

The invention furthermore relates to a device by means of which fodder which is stored against a wall can be removed. According to another aspect of the invention the loading means may be provided with a supporting means, which, when fodder is being collected, may be supported against a wall against which the stock of fodder is stored. The supporting means thereby detects the location of the wall and may provide a guide for said loading along said wall. To that end the supporting means may be hydraulically movable and the movements of the said loading means may be controlled independently of the movement of the movement of said supporting means. The loading board which collects the fodder is thereby steered along the wall by the supporting means.

According to another aspect the loading means comprise a loading board which is mounted on a telescoping arm, which is capable of pivoting movement in a substantially vertical plane, whereby said supporting means comprises a sensor means, which is capable of detecting a wall against which the stock of fodder is stored, and, based on said detection, deliver a signal which causes the arm to telescope in or out. In this manner it is possible to collect the stored material up to the wall of the storage space without any special dexterity of the operators being required.

According to another aspect of the invention the wall of the container may near its bottom side be provided with two opposed closable outlet openings for discharging the fodder. Said outlet openings may be positioned such that while the device is driving, with the loading means being positioned at the rear side thereof, the fodder can be discharged from both sides of the device while the device is moving along the feeding place for the animals.

The invention relates in particular to a device provided with a frame which can be attached to the three-point linkage of a tractor, which frame extends under the container and which is provided with driving means for rotating the container with the loading means attached thereto and/or the rotatable disc, which makes up at least part of the bottom of said container, about a substantially vertical central axis.

The invention furthermore relates to a method for collecting fodder, wherein a vehicle is driven along a stock of fodder and wherein the fodder is cut off or sawn off from said stock on one side of said vehicle and is moved into a container.

Further aspects of the invention, which may be used both separately and in combination with each other, are described in the explanation of the embodiment and defined in the claims.

Hereafter a few embodiments of the invention will be described by way of illustration with reference to the drawing.
Figure 1 is a schematic view of the device;
Figure 2 is a partial sectional view of the device;
Figure 3 is a plan view of the device hitched to a tractor;
Figure 4 shows a second embodiment;
Figure 5 shows the second embodiment in the situation as shown in Figure 1; and
Figure 6 shows the second embodiment in the situation as shown in Figure 2.

The Figures are merely schematic illustrations of an embodiment, with like parts being numbered alike in the various Figures.

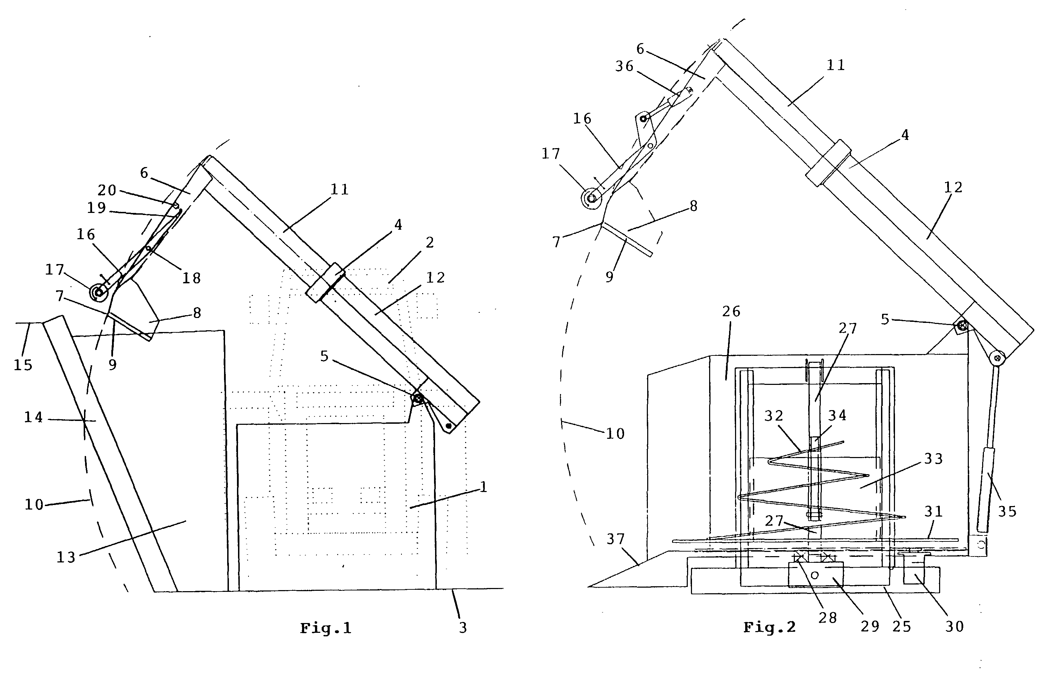

Figure 1 schematically shows the device 1, which is hitched to a tractor 2, which is illustrated in dotted lines. The device 1 is attached to the three-point linkage of tractor 2, and in the situation shown the device 1 has been lowered and placed on the floor 3.

The device is provided with an arm 4, which is capable of hydraulically controlled telescoping movement. Arm 4 is secured to the other part of the device in such manner as to pivot about pivot pin 5, so that arm 4 can be pivoted in a vertical plane by hydraulic operating means (not shown in Figure 1). A loading board 6 is secured to the end of arm 4, said loading board on its bottom side being provided with sawing means 7. Loading board 6 is provided with loading board portions 8 on both side edges, said loading board portions being mounted perpendicularly to the loading board 6 and likewise being provided with sawing means 9 on their bottom sides.

When arm 4, with loading board 6 attached thereto, pivots about pivot pin 5, the bottom edge of the loading board describes a circle indicated by means of dashed line 10. The shape of the path 10 through which the bottom edge of cutting board 6 moves may be changed by altering the length of pivoting arm 4 during the pivoting movement of pivoting arm by telescoping the two parts 11 and 12 of arm 4 in or out.

According to Figure 1 the device is present in a pit in which ensilaged fodder 13 is stored. The pit has a floor 3 and a sloping concrete side wall 14. The upper edge of concrete side wall 14 is positioned at ground level 15.

In order to be able to collect the ensilaged fodder 13 up to side wall 14, loading board 6 must move through such a path during its downward movement that the bottom edge 7 of loading board 6 is moved right along the surface of side wall 14. To that end the length of arm 4 must be varied during the downward movement of said arm.

In order to facilitate the movement of the bottom edge 7 of loading board 6 along the side wall 14 a supporting means or sensor means 16 is mounted on loading board 6. Sensor means 16 is provided with a rotatable wheel 17, which can roll against side wall 14, whereby said sensor means 16 pivots about pivot pin 18, so that the end 19 of sensor means 16 operates a switch 20. Switch 20 may also be in the form of a hydraulic locating means. The movement of sensor means 16 determines the hydraulic telescoping of arm 4, as a result of which the path of the bottom edge of loading board 6 is controlled in such a manner that said bottom edge moves along the surface of side wall 14 during its downward movement.

The device is illustrated in more detail in Figure 2. Figure 2 shows the frame 25 of the device, which frame 25 may be connected to the three-point linkage of a tractor. Frame 25 extends to below container 26, one side wall of which has been left out in Figure 2 to show the interior of container 26. Container 26 can rotate about a central axis 27 with respect to frame 25 and is supported on bearing 28. The driving means 30 for rotating container 26 may be operated hydraulically or mechanically, via the power take-off shaft of the tractor.

A disc 31, which is likewise capable of rotating movement about a central axis 27, is present within container 26, which disc makes up a substantial part of the bottom of container 26. Disc 31 is rotated by drive unit 29, which may be a hydraulic drive unit or a mechanical drive unit operated from the power take-off shaft of the tractor. Mounted above disc 31 is a catch means 32, which rotates along with disc 31 and mixes, moves and loosens the fodder present within container 26.

Figure 2 shows an outlet opening present in the side wall behind disc 31. Said outlet opening is closed by the vertically movable closing plate 33, which can be opened and closed by means of a hydraulic cylinder 34. When closing plate 33 has been moved upward the fodder can leave the container as a result of being led to the outlet opening by rotation of disc 31.

Positioned near the upper edge of container 26 is the arm 4, which consists of two parts 11 and 12, which can slide one into the other. Arm 4 can pivot about pivot pin 6 under the control of hydraulic control cylinder 35. By pivoting arm 4 about pivot pin 5 and simultaneously telescoping parts 11 and 12 of arm 4 in and out, the path 10 through which the bottom edge of loading board 6 moves may be varied at will.

In order to be able to move the bottom edge 7 of loading board 6, for example along a wall, sensor means 16 is according to Figure 2 connected to hydraulic cylinder 36, whereby the length of arm 4 is controlled by the signal from hydraulic cylinder 36 during the downward pivoting movement of arm 4. This makes it possible in particular to move the loading board along a sloping wall in order to collect the fodder along said wall.

The container 26 is furthermore provided with a sloping plate 37, along which the fodder that has been collected by loading board 6 can be moved to the interior of container 26 as a result of arm 4 being retracted when loading board 6 is in its lowermost position.

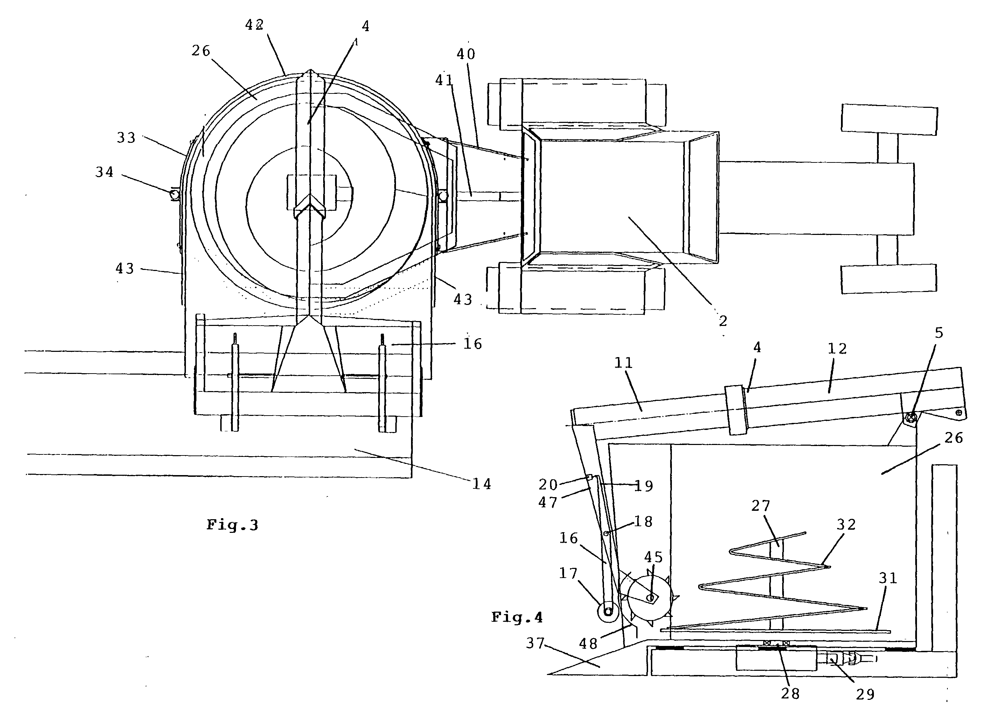

Figure 3 shows the same device in plan view. The device is attached to the three-point linkage 40 of tractor 2 and driven by means of power take-off shaft 41. The container 26 can pivot about a central axis perpendicularly to the plane of the drawing. In the position shown in Figure 3 the container 26 has been pivoted in such a manner that loading board 6 is positioned on the right-hand side of the device. Container 26 can pivot in such a manner that loading board 6 is positioned on the rear side or on the left-hand side.

The plan view of Figure 3 shows the semicircular side wall 42 of container 26, which merges into a substantially flat wall part 43 on both ends of wall part 42. The spacing between the two wall parts 43 corresponds with the width of loading board 6, so that in the retracted position of arm 4, in which position the loading board occupies its lowermost position, loading board 6 and wall parts 43 and 42 together form the wall of container 26.

The plan view of Figure 3 also shows the two closing plates 33 and the hydraulic control cylinders 34, by means of which closing plates 33 can be moved upward and downward. By moving the closing plates 33 upward outlet openings may be opened, through which openings the fodder present within the container can be discharged to the outside. When the container has been rotated such that loading board 6 is positioned on the rear side, the two outlet openings are positioned on either side of the device, so that the fodder can be discharged whilst the device is moving along the feeding place.

Figures 4, 5 and 6 show a second embodiment of a device for collecting fodder. The device is different from the device according to the first embodiment in that pivoting arm 4, which consists of two telescoping parts 11, 12, is provided with a loading element comprising a cutter 46 which is rotatable about a substantially horizontal axis 45. Cutter 46 consists of a substantially cylindrical roller, whose surface is provided with outwardly extending catch means and/or loosening means. Cutter 46 may be secured near the bottom side of a board (47), which is mounted on the pivoting arm 4, substantially perpendicularly to said pivoting arm.

In the situation shown in Figure 4 cutter 46 is positioned within container 26 and board 47 makes up a part of the wall of said container. In order to prevent fodder from landing outside the container, near the bottom of said container, a plate 48 is provided near cutter 46, so that the container is entirely enclosed by a wall. By rotating cutter 46, preferably in anti-clockwise direction (seen in Figure 4) the mixing and/or loosening operation of the fodder in container 26 will be accelerated or be intensified.

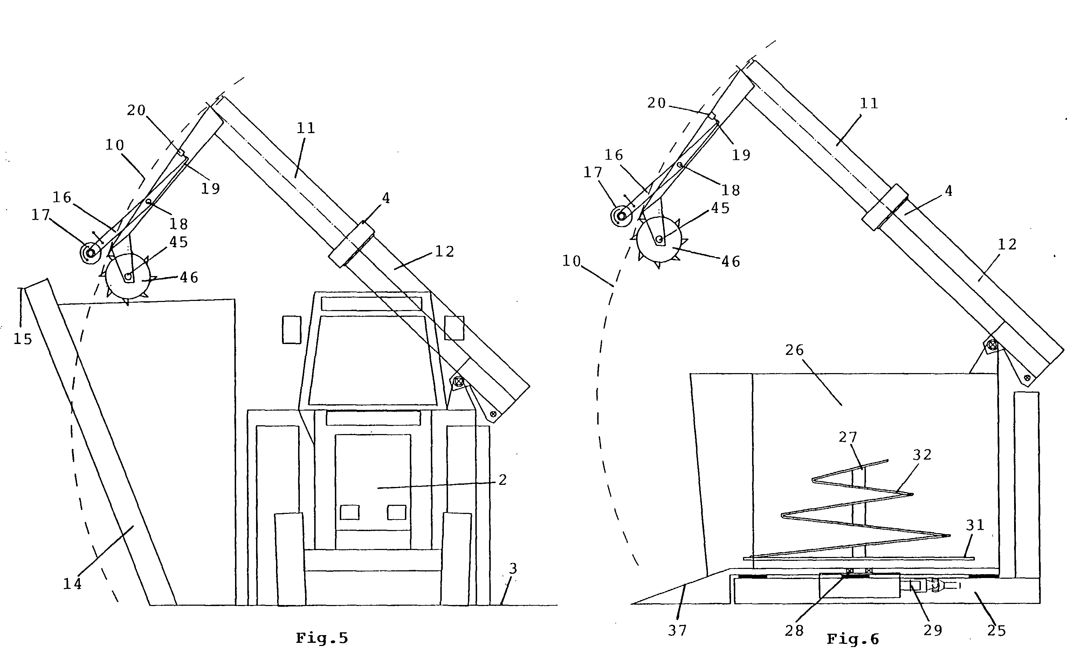

Figures 5 and 6 show the device with an upwardly pivoted arm 4, which arm is pivoted downwards when silage material is removed from a stock thereof. The cutter 46 which loosens the silage material may be driven in clockwise direction as well as in anti-clockwise direction (seen in the Figures). In the case of grass silage the cutter is driven in clockwise direction, whereby the loosened silage material is moved across the cutter in the direction of the container, whilst in the case of maize silage the cutter can be driven in anti-clockwise direction. In that case the silage material is moved under the cutter in the direction of container 26.

By using the device according to the invention silage material can be successively loosened at different places, be moved towards the container and subsequently be loaded thererin, without a change of position of the container being required thereby. The silage material can be moved to the container from various directions and over various distances. Thus silage material which is present at a random distance from the container can be moved to the container and subsequently be loaded in the container, also when the distance between said material and said container is rather large.

Because the illustrated device makes it possible to collect ensilaged fodder beside the path of movement of the device, said device may be used for ensilaged fodder which is present at a location where there is little manoeuvring space for a tractor.

The illustrated embodiment is to be considered as such, there are a great many ways to implement the invention.

## Claims

1. A device for collecting fodder comprising a frame (25) provided with a container (26), in which the fodder (13) can be deposited, and with loading means (4,6 or 37), provided with a loading element (6 or 37), for transferring said fodder (13) from a stock thereof to said container (26), whereby the container (26) and said loading means (4,6 or 37) are capable of pivoting movement about a substantially vertical axis (27) with respect to said frame (25), in such a manner that the fodder (13) can be moved to and be loaded into said container (26) from various directions, **characterized in that** a disc (31) provided with means (32) for loosening and/or mixing the fodder is present within said container (26), which disc (31) making up at least partially the bottom of the container, and that said container (26), said loading means (4,6 or 37) and said means (32) for loosening and/or mixing the fodder are rotatable about the same axis (27) with respect to said frame (25).

2. A device according to any one of the preceding claims, **characterized in that** part of the wall of said container (26) is made up of a loading board (37 or 6), which may form part of said container (26) and/or which may form part of said loading means (4, 6).

3. A device according to any one of the preceding claims, **characterized in that** the part of the wall positioned opposite said loading board (37 or 6) is substantially semicircular, seen from above.

4. A device according to any one of the preceding claims, whereby said loading element (6) comprises loosening means (46), which are capable of loosening silage material (13) from a stock thereof, which loosening means comprise a cutter (46), which is rotatable about a horizontal axis (45), **characterized in that** said cutter (46) can be driven in both directions of rotation.

5. A device according to any one of the claim 4, **characterized in that** said loosening means can be moved to within said container (26) to work the fodder within said container (26).

6. A device according to claim 5, **characterized in that** said loading means are provided with a plate (48) which may form part of the wall of said container (26) when said loosening means have been moved to within said container (26).

7. A device according to any one of the preceding claims, **characterized in that** said loading element (6) is secured to a telescoping arm (11, 12), which arm is secured near the upper edge of the container (26), on the side of said container (26) which faces away from said loading board, in such manner as to be capable of pivoting movement in a substantially vertical plane.

8. A device according to any one of the preceding claims, **characterized in that** said loading means (4,6) are provided, on the side facing away from said container (26), with a supporting means (17), which, when the fodder is being collected, can be supported against a wall against which said stock of fodder (13) is stored.

9. A device according to claim 8, **characterized in that** said supporting means (17) is hydraulically movable with respect to said loading element.

10. A device according to claim 8 or 9, **characterized in that** the movement of said loading element is controlled dependently of the movement of said supporting means (17).

11. A device according to any one of the claims 8 - 10, **characterized in that** said loading element is mounted on a telescoping arm (11, 12), which is capable of pivoting movement in a substantially vertical plane, whereby said supporting means comprises a sensor means (17), which is capable of detecting a wall against which the stock of fodder (13) is stored, and, based on said detection, deliver a signal which causes said arm (11, 12) to telescope in or out.

12. A device according to any one of the preceding claims, **characterized in that** the wall of said container (26) is near its bottom side be provided with two opposed closable outlet openings for discharging the fodder.

13. A device according to any one of the preceding claims, wherein said device is provided with a frame (25) which can be attached to the three-point linkage of a tractor, which frame (25) extends under the container (26) and which is provided with driving means for rotating the container (26) with the loading means (4,6) attached thereto and/or the rotatable disc (31), which makes up at least part of the bottom of said container (26), about a substantially vertical central axis (27).

14. A method for collecting fodder (13), wherein a vehicle is driven along a stock of fodder (13) and wherein the fodder (13) is cut off or sawn off from said stock, the vehicle comprising a frame (25) provided with a container (26), in which the fodder (13) is deposited, and with loading means (4,6 or 37), provided with a loading element (6 or 37), for transferring said fodder (13) from a stock thereof to said container (26), whereby the container (26) and said loading means move pivoting about a substantially vertical axis (27) with respect to said frame (25), in such a manner that the fodder (13) is moved to and is loaded into said container (26) from various directions, **characterized in that** the fodder (13) is loosened and/or mixed within said container (26) by means (32) for loosening and/or mixing the fodder, which means (32) are mounted on a disc (31) making up at least partially the bottom of the container, whereby said means (32) are rotated about the same axis (27) with respect to said frame (25).

## Patentansprüche

1. Vorrichtung zur Futteraufnahme aufweisend: einen Rahmen (25), der mit einem Behälter (26), in welchem Futter (13) eingelegt werden kann, und mit Belademitteln (4, 6 bzw. 37) ausgerüstet ist, welche mit einem Beladeelement (6 bzw. 37) versehen sind, um das Futter (13) aus einem Lagervorrat zu dem Behälter (26) zu überführen, wobei der Behälter (26) und die Belademittel (4, 6, bzw. 37) zu einer Schwenkbewegung um eine im Wesentlichen vertikale Achse (27) bezüglich des Rahmens (25) in einer Weise fähig sind, dass das Futter (13) aus verschiedenen Richtungen zum Behälter (26) hinbewegt und in diesen eingeladen werden kann, **dadurch gekennzeichnet**, dass sich eine mit Mitteln (32) zum Auflockern und/oder Mischen des Futters versehene Scheibe (31) im Behälter (26) befindet, wobei die Scheibe (31) wenigstens teilweise den Behälterboden ausmacht, und dass der Behälter (26), die Belademittel (4, 6 bzw. 37) und die Mittel (32) zum Auflockern und/oder Mischen des Futters um dieselbe Achse (27) bezüglich des Rahmens (25) drehbar sind.

2. Vorrichtung gemäß dem vorhergehenden Anspruch, **dadurch gekennzeichnet**, dass ein Wandabschnitt des Behälters (26) aus einer Beladeplanke (37 bzw. 6) besteht, welche einen Abschnitt des Behälters (26) bilden kann und/oder welche einen Abschnitt der Belademittel (4, 6) bilden kann.

3. Vorrichtung gemäß irgendeinem der vorhergehenden Ansprüche, **dadurch gekennzeichnet**, dass der gegenüber der Beladeplanke (37 bzw. 6) positionierte Wandabschnitt von oben gesehen im Wesentlichen halbkreisförmig ist.

4. Vorrichtung gemäß irgendeinem der vorhergehenden Ansprüche, wobei das Beladeelement (6) Lösemittel (46) aufweist, die geeignet sind das Silagematerial (13) von einem Lagervorrat zu lockern, wobei die Auflockerungsmittel eine Schneidvorrichtung (46) aufweisen, die um eine horizontale Achse (45) herum drehbar ist, **dadurch gekennzeichnet**, dass die Schneideinrichtung (46) in beide Drehrichtungen antreibbar ist.

5. Vorrichtung gemäß Anspruch 4, **dadurch gekennzeichnet**, dass die Lösemittel zum Bearbeiten des Futters im Behälter (26) zum Behälter (26) hinbewegt werden können.

6. Vorrichtung gemäß Anspruch 5, **dadurch gekennzeichnet**, dass die Belademittel mit einer Platte (48) versehen sind, die einen Wandabschnitt des Behälters (26) bilden kann, wenn die Lösemittel zum Behälter (26) hinbewegt wurden.

7. Vorrichtung gemäß irgendeinem der vorhergehenden Ansprüche, **dadurch gekennzeichnet**, dass das Beladeelement (6) an einem Teleskoparm (11, 12) festgelegt ist, wobei der Arm in der Nähe des oberen Randes des Behälters (26) an der der Beladeplanke abgewandten Seite des Behälters (26) in einer solchen Weise festgelegt ist, dass er zu einer Schwenkbewegung in einer im Wesentlichen vertikalen Ebene fähig ist.

8. Vorrichtung gemäß irgendeinem der vorhergehenden Ansprüche, **dadurch gekennzeichnet**, dass die Belademittel (4, 6) an der dem Behälter (26) abgewandten Seite mit einem Abstützmittel (17) versehen sind, das beim Aufnehmen von Futter an einer Wand angreifen kann, an welcher der eingelagerte Futtervorrat (13) anliegt.

9. Vorrichtung gemäß Anspruch 8, **dadurch gekennzeichnet**, dass das Abstützmittel (17) bezüglich des Beladeelements hydraulisch betätigbar ist.

10. Vorrichtung gemäß Anspruch 8 oder 9, **dadurch gekennzeichnet** dass die Bewegung des Beladeelements in Abhängigkeit der Bewegung des Stützmittels (17) gesteuert wird.

11. Vorrichtung gemäß irgendeinem der Ansprüche 8 bis 10, **dadurch gekennzeichnet**, dass das Beladeelement an einem Teleskoparm (11, 12) befestigt ist, welcher zu einer Schwenkbewegung in einer im Wesentlichen vertikalen Ebene fähig ist, wobei das Stützmittel eine Sensoreinrichtung (17) aufweist, die geeignet ist eine Wand zu erfassen, an welcher Futtervorrat (13) anliegt, und auf Basis dieser Erfassung ein Signal auszugeben, welches den Arm (11, 12) veranlasst ein-oder auszufahren.

12. Vorrichtung gemäß irgendeinem der vorhergehenden Ansprüche, **dadurch gekennzeichnet**, dass die Wand des Behälters (26) in der Nähe ihrer Bodenseite zum Auslassen von Futter mit zwei einander gegenüberliegenden, verschließbaren Auslassöffnungen versehen ist.

13. Vorrichtung gemäß irgendeinem der vorhergehenden Ansprüche, wobei die Vorrichtung mit einem Rahmen (25) versehen ist, der an einen Dreipunktanbau eines Traktors befestig werden kann, wobei sich der Rahmen (25) unterhalb des Behälters (26) erstreckt und mit Antriebsmitteln versehen ist, die den Behälter (26) mit den daran befestigten Belademitteln (4, 6), und/oder die Drehscheibe (31), die wenigstens einen Anteil des Bodens des Behälters (26) ausmacht, um eine im Wesentlichen vertikale Achse drehen.

14. Verfahren zum Aufnehmen von Futter (13), wobei ein Fahrzeug entlang eines Lagervorrats von Futter (13) fährt, und wobei das Futter (13) vom Lagervorrat abgeschnitten oder abgesägt wird, wobei das Fahrzeug einen Rahmen (25) aufweist, der mit einem Behälter (26), in welchen Futter (13) eingelegt ist, und mit Belademitteln (4, 6 bzw. 37) ausgerüstet ist, welche mit einem Beladeelement (6 bzw. 37) versehen sind, um das Futter (13) aus einem Lagervorrat zu dem Behälter (26) zu überführen, wobei der Behälter (26) und die Belademittel sich schwenkend um eine im Wesentlichen vertikale Achse (27) bezüglich des Rahmens (25) in einer solchen Weise bewegen, dass das Futter (13) aus verschiedenen Richtungen zum Behälter (26) hinbewegt und in diesen eingeladen wird, **dadurch gekennzeichnet**, dass das Futter (12) innerhalb des Behälters (26) von Mitteln (32) zum Auflockern und/oder Mischen aufgelockert und/oder gemischt wird, wobei die Mittel (32) auf einer Scheibe (31) befestigt sind, die wenigstens teilweise den Behälterboden ausmacht, wodurch die Mittel (32) um dieselbe Achse (27) bezüglich des Rahmens (25) herumgedreht werden.

## Revendications

1. Dispositif de prélèvement de fourrage, comprenant un bâti (25) présentant un conteneur (26) dans lequel le fourrage (13) peut être déposé, et des moyens de chargement (4, 6 ou 37) munis d'un élément de chargement (6 ou 37) pour transférer ledit fourrage (13) audit conteneur (26), à partir d'un stock dudit fourrage, de sorte que le conteneur (26) et lesdits moyens de chargement (4, 6 ou 37) sont aptes à accomplir un mouvement pivotant autour d'un axe (27) sensiblement vertical, par rapport audit bâti (25), de façon telle que le fourrage (13) puisse être déplacé vers ledit conteneur (26), et déversé dans ce dernier à partir de diverses directions, caractérisé par le fait qu'un disque (31), pourvu de moyens (32) pour disperser et/ou mélanger le fourrage, se trouve à l'intérieur dudit conteneur (26), ledit disque (31) matérialisant au moins en partie le fond du conteneur ; et par le fait que ledit conteneur (26), lesdits moyens de chargement (4, 6 ou 37) et lesdits moyens (32) de dispersion et/ou mélange du fourrage peuvent tourner, autour du même axe (27), par rapport audit bâti (25).

2. Dispositif selon la revendication précédente, caractérisé par le fait qu'une partie de la paroi dudit conteneur (26) se présente comme une plate-forme de chargement (37 ou 6) qui peut faire partie dudit conteneur (26) et/ou qui peut faire partie desdits moyens de chargement (4, 6).

3. Dispositif selon l'une quelconque des revendications précédedences, caractérisé par le fait que la partie de la paroi, située à l'opposé de ladite plate-forme de chargement (37 ou 6), est pour l'essentiel semi-circulaire observée par-dessus.

4. Dispositif selon l'une quelconque des revendications précédentes, dans lequel ledit élément de chargement (6) comprend des moyens de dissociation (46) qui sont aptes à dissocier du fourrage (13) d'avec un stock dudit fourrage, lesquels moyens de dissociation comprennent un sectionneur (46) pouvant tourner autour d'un axe horizontal (45), caractérisé par le fait que ledit sectionneur (46) peut être entraîné dans les deux directions de rotation.

5. Dispositif selon la revendication 4, caractérisé par le fait que lesdits moyens de dissociation peuvent être présentés, à l'intérieur dudit conteneur (26), pour travailler le fourrage à l'intérieur dudit conteneur (26).

6. Dispositif selon la revendication 5, caractérisé par le fait que lesdits moyens de chargement sont munis d'une plaque (48) qui peut former partie intégrante de la paroi dudit conteneur (26) lorsque lesdits moyens de dissociation ont été présentés à l'intérieur dudit conteneur (26).

7. Dispositif selon l'une quelconque des revendications précédentes, caractérisé par le fait que ledit élément de chargement (6) est fixé à un bras télescopique (11, 12), lequel bras est fixé à proximité du bord supérieur du conteneur (26), sur le côté dudit conteneur (26) qui est tourné à l'opposé de ladite plate-forme de chargement, de manière à pouvoir accomplir un mouvement pivotant dans un plan pour l'essentiel vertical.

8. Dispositif selon l'une quelconque des revendications précédentes, caractérisé par le fait que lesdits moyens de chargement (4, 6) sont dotés, sur le côté tourné à l'opposé dudit conteneur (26), d'un moyen de support (17) qui, lorsque le fourrage est en cours de recueillement, peut prendre appui contre une paroi contre laquelle ledit stock de fourrage (13) est emmagasiné.

9. Dispositif selon la revendication 8, caractérisé par le fait que ledit moyen de support (17) est mobile hydrauliquement vis-à-vis dudit élément de chargement.

10. Dispositif selon la revendication 8 ou 9, caractérisé par le fait que le mouvement dudit élément de chargement est commandé en fonction du mouvement dudit moyen de support (17).

11. Dispositif selon l'une quelconque des revendications 8-10, caractérisé par le fait que ledit élément de chargement est monté sur un bras télescopique (11, 12) qui est apte à accomplir un mouvement pivotant dans un plan sensiblement vertical, de sorte que ledit moyen de support comprend un moyen capteur (17) en mesure de détecter une paroi contre laquelle le stock de fourrage (13) est emmagasiné et de délivrer, sur la base de ladite détection, un signal provoquant la rétraction ou le déploiement télescopique dudit bras (11, 12).

12. Dispositif selon l'une quelconque des revendications précédentes, caractérisé par le fait que la paroi dudit conteneur (26) est munie, à proximité de sa face inférieure, de deux ouvertures de sortie opposées et obturables, pour décharger le fourrage.

13. Dispositif selon l'une quelconque des revendications précédentes, ledit dispositif étant pourvu d'un bâti (25) qui peut être relié à l'attelage trois points d'un tracteur, lequel bâti (25) s'étend au-dessous du conteneur (26) et est équipé de moyens d'entraînement pour imprimer une rotation au conteneur (26) auquel les moyens de chargement (4, 6) sont rattachés, et/ou au disque tournant (31) matérialisant au moins une partie du fond dudit conteneur (26), autour d'un axe médian (27) sensiblement vertical.

14. Procédé de prélèvement de fourrage (13), dans lequel un véhicule est entraîné le long d'un stock de fourrage (13), et dans lequel le fourrage (13) est dissocié d'avec ledit stock, par sectionnement ou par sciage, le véhicule comprenant un bâti (25) présentant un conteneur (26) dans lequel le fourrage (13) est déposé, et des moyens de chargement (4, 6 ou 37) munis d'un élément de chargement (6 ou 37) pour transférer ledit fourrage (13) audit conteneur (26), à partir d'un stock dudit fourrage, de sorte que le conteneur (26) et lesdits moyens de chargement pivotent autour d'un axe (27) sensiblement vertical, par rapport audit bâti (25), de façon telle que le fourrage (13) soit déplacé vers ledit conteneur (26), et déversé dans ce dernier, à partir de diverses directions, caractérisé par le fait que le fourrage (13) est dispersé et/ou mélangé, à l'intérieur dudit conteneur (26), par des moyens (32) de dissociation et/ou mélange du fourrage, lesquels moyens (32) sont montés sur un disque (31) matérialisant au moins en partie le fond du conteneur, de sorte que lesdits moyens (32) sont animés d'une rotation autour du même axe (27) par rapport audit bâti (25).
